# EUROPÄISCHE PATENTANMELDUNG

(11) **EP 2 682 036 A2**
(43) Veröffentlichungstag der Anmeldung: **08.01.2014**
(21) Anmeldenummer: 13401066.9
(22) Anmeldetag: 02.07.2013
(51) Int. Cl.: A47L 15/00, A47L 15/48

(54) **Geschirrspülmaschine und Verfahren zum Aufheizen von Spülflotte in einer Geschirrspülmaschine**

(30) Priorität: 03.07.2012 DE 102012105904
(71) Anmelder: Miele & Cie. KG, 33332 Gütersloh (DE)
(72) Erfinder: Bertram, Andre, 33739 Bielefeld (DE); Dahms, Tobias, 30519 Hannover (DE)

(57) **Zusammenfassung**

Die Erfindung betrifft ein Verfahren zum Aufheizen von Spülflotte in einer Geschirrspülmaschine (8), wobei innerhalb eines Wärmepumpenkreislaufes (1) Zuluft (10) in einen Verdampfer (2) gesaugt wird, wobei die Zuluft (10) innerhalb des Verdampfers (2) Wärmeenergie an ein Kältemittel abgibt, wobei anschließend das erwärmte Kältemittel mittels eines Verdichters (3) komprimiert wird, und wobei anschließend das komprimierte Kältemittel innerhalb eines Verflüssigers (4) kondensiert wird und Wärmeenergie an Spülflotte abgibt. Um einen besseren Wärmeübergang von der Zuluft (10) an das Kältemittel zu schaffen, wird ein verbessertes Verfahren vorgeschlagen, bei welchem zumindest eine Komponente der Zuluft (10) innerhalb des Verdampfers (2) kondensiert.

## Beschreibung

Die Erfindung betrifft eine Geschirrspülmaschine und ein Verfahren zum Aufheizen von Spülflotte in einer Geschirrspülmaschine, wobei innerhalb eines Wärmepumpenkreislaufes Zuluft in einen Verdampfer gesaugt wird, wobei die Zuluft innerhalb des Verdampfers Wärmeenergie an ein Kältemittel abgibt, wobei anschließend das erwärmte Kältemittel mittels eines Verdichters komprimiert wird, und wobei anschließend das komprimierte Kältemittel innerhalb eines Verflüssigers kondensiert wird und Wärmeenergie an Spülflotte abgibt.

Die DE 102011000042.9 beschreibt ein Verfahren zum Aufheizen von Spülflotte einer Geschirrspülmaschine, welches eine Luft- Wasser-Wärmepumpe verwendet. In deren Wärmepumpenkreislauf wird Energie von einem gasförmigen Stoffstrom mit einem niedrigen Temperaturniveau auf einen flüssigen Stoffstrom mit einem höheren Temperaturniveau übertragen. Als Wärmequelle dient dabei die Raumluft am Aufstellungsort der Geschirrspülmaschine, d.h. zum Beispiel die Küchenluft. Die Wärmesenke ist die Spülflüssigkeit (Spülflotte) der Geschirrspülmaschine.

Ein Wärmepumpenkreislauf besteht im Wesentlichen aus vier Bauteilen, die strömungstechnisch über ein Rohrleistungssystem verbunden sind, in welchem ein Arbeitsmedium (Kältemittel) strömt. In Strömungsrichtung des Kältemittels sind die Bauteile so angeordnet, dass zuerst der Verdampfer (Wärmeübertrager), anschließend der Verdichter (Strömungsmaschine) und schließlich der Verflüssiger (Wärmeübertrager) durchströmt werden. Anschließend durchläuft das Kältemittel eine Drosselstelle.

Für den Betrieb des Wärmepumpenkreislaufes wird zuerst flüssiges Kältemittel in den Verdampfer eingespritzt. Aufgrund des niedrigen Druckes im Verdampfer kann das Kältemittel Energie aufnehmen und bei niedrigen Temperaturen verdampfen. Anschließend saugt der Verdichter das gasförmige Kältemittel mit niedrigem Druck an und verdichtet es auf einen hohen Druck. Dabei wird das Kältemittel heiß. Das Kältemittel beinhaltet dadurch ungefähr die Summe aus Verdampfungsenergie und Antriebsenergie des Verdichters. Diese Energie wird innerhalb des Verflüssigers wieder abgegeben. Dies geschieht durch das Kondensieren des Kältemittels. Schließlich wird das flüssige Kältemittel mittels der Drosselstelle auf einen niedrigen Druck expandiert, wo es anschließend wieder verdampfen kann, um den Wärmepumpenkreislauf ein weiteres Mal zu durchlaufen.

Damit dieser Wärmepumpenkreislauf funktioniert, muss dem Verdampfer Wärmeenergie zur Verfügung gestellt und dem Verflüssiger Wärme entzogen werden. Der Verdampfer erhält dabei wie zuvor beschrieben die notwendige Wärmeenergie zur Verdampfung des Kältemittels durch das Abkühlen von Zuluft (d.h. Raumluft), während der Verflüssiger die Wärmeenergie an Spülflotte der Geschirrspülmaschine abgibt.

Obwohl sich das im Stand der Technik bekannte Verfahren zum Aufheizen von Spülflotte mittels eines Wärmepumpenkreislaufes bewährt hat, besteht weiterer Verbesserungsbedarf, insbesondere bezüglich der innerhalb des Verdampfers stattfindenden Wärmeübertragung.

Es ist daher die **Aufgabe** der Erfindung, eine Geschirrspülmaschine und ein verbessertes Verfahren zum Aufheizen von Spülflotte in einer Geschirrspülmaschine zur Verfügung zu stellen, wobei der Wärmepumpenkreislauf in Bezug auf die von der Zuluft auf Spülflotte übertragene Wärmeenergie optimiert ist.

Zur **Lösung** dieser Aufgabe wird mit der Erfindung ein Verfahren und eine Vorrichung gemäß den unabhängigen Ansprüchen vorgeschlagen. Weiterbildungen ergeben sich aus den davon abhänigen Ansprüchen.

Zum Aufheizen von Spülflotte, welche im Spülraum der Geschirrspülmaschine zum Reinigen von Spülgut eingesetzt wird, wird eine Luft-Wasser-Wärmepumpe verwendet. Diese umfasst einen Wärmepumpenkreislauf mit insbesondere einem Verdampfer, einem Verdichter und einem Verflüssiger. Dabei wird Zuluft durch einen Verdampfer geleitet, wobei die Zuluft innerhalb des Verdampfers Wärmeenergie an ein Kältemittel abgibt. Das hierbei verdampfte Kältemittel wird mittels des Verdichters komprimiert und anschließend das komprimierte Kältemittel innerhalb des Verflüssigers kondensiert. Dabei gibt es Wärmeenergie an Spülflotte ab. Durch diese Aufheizung wird die Spülflotte auf die zum Reinigen des Spülgutes vorgesehene und erfoderliche Temperatur gebracht.

Die Geschirrspülmaschine, etwa eine Haushaltgeschirrspülmaschine, weist einen mit einer Beschickungstür in an sich bekannter Weise verschließbaren Spülraum auf. Während eines Spülprogramms wird das im Spülraum befindliche Spülgut zunächst gespült und anschließend getrocknet. Das Spülen umfasst typischerweise mehrere wasserführende Programmabschnitte, etwa die Programmabschnitte REINIGEN und KLARSPÜLEN. Im Spülbetrieb, also während wasserführender Programmabschnitte ist der Spülraum durch die Beschickungstür verschlossen.

Bei der Zuluft, welche die Wärmequelle der Wärmepumpe darstellt, handelt es sich um Raumluft, also Luft aus dem Aufstellungsraum der Geschirrspülmaschine etwa der Küche, die insbesondere eine für derartige Räume übliche Umgebungstemperatur aufweist, also ca. 15 bis 25°C. Die Förderung der Zuluft bzw. Raumluft erfolgt während der Heizphase eines Spülprogramms, bei der Spülflotte aufgeheizt wird, insbesondere also während eines wasserführenden Programmabschnittes. Die Förderung der Zuluft erfolgt somit insbesondere bei geschlossener Beschickungstür.

Das erfindungsgemäße Verfahren zeichnet sich insbesondere dadurch aus, dass zumindest eine Komponente der Zuluft innerhalb des Verdampfers kondensiert. Das erfindungsgemäße Verfahren nutzt somit das Prinzip der sogenannten nassen Kühlung.

Bei der Kühlung von Gasen, insbesondere Luft, können im Wesentlichen zwei verschiedene Fälle unterschieden werden, die trockene Kühlung und die nasse Kühlung. Die trockene Kühlung bezeichnet dabei eine Kühlung ohne Wasserausscheidung, welche an einer kalten Wärmeübertragungsfläche erfolgt, die die Taupunkttemperatur der auftreffenden feuchten Luft nicht unterschreitet. Somit erfolgt bei der trockenen Kühlung kein Auskondensieren des Wasserdampfes, wodurch der absolute Wasserdampfgehalt der Luft konstant bleibt. Dem gegenüber wird erfindungsgemäß die Taupunkttemperatur der feuchten Luft unterschritten, so dass der Wasserdampf an den Verdampferoberflächen kondensiert. Der Luft wird somit das Wasser entzogen. Durch das Kondensieren zumindest einer Komponente der Zuluft, insbesondere des darin enthaltenen Wasserdampfes, ist ein wesentlich besserer Wärmeübertrag an das Kältemittel möglich als nur aufgrund der trockenen Kühlung. Bei trockener Kühlung wären zur Erreichung des gleichen Wärmeübertrages wesentlich größere Wärmetauscherflächen notwendig bzw. eine höhere Luftmengenzufuhr. Dadurch ergäbe sich ein viel zu großer notwendiger Bauraum für den Wärmetauscher. Eine nasse Kühlung vermeidet die vorgenannten Probleme.

Damit wird bewusst ein Nachteil in Kauf genommen, welcher durch die nasse Kühlung entsteht, nämlich die Bildung von Kondensat im Verdampfer. Bisher wird die Kondensation in Hinblick auf die den Verdampfer nahe liegenden elektrischen und elektronischen Komponenten stets vermieden, weil dabei besondere Vorsichtsmaßnahmen getroffen werden müssen. Die Erfindung erkennt jedoch den Vorteil der effizienteren Energieübertragung durch nasse Kühlung, welcher den Nachteil der Flüssigkeitsbildung überwiegt.

Um ein Auskondensieren des Wasserdampfes aus der Zuluft zu gewährleisten, muss die Verdampferoberflächentemperatur unter der Taupunkttemperatur der feuchten Raumluft liegen. Die Taupunkttemperatur von 20°C warmer und 50% r.F. relativer feuchter Luft beträgt bei einem Luftdruck von 1013 hPa in etwa 9,3°C. Folglich muss die Verdampferoberflächentemperatur im Inneren des Verdampfers geringer als 9,3°C sein. Je geringer die Kühleroberflächentemperatur ist, desto kleiner kann der Wärmetauscher ausgebildet sein.

Vorteilhaft liegt die Verdampfungstemperatur des Kältemittels zwischen -15° und 10°C, insbesondere zwischen 0°C und 5°C. Die Wahl des Kältemittels mit einer Verdampfungstemperatur in diesem Temperaturbereich verhindert zudem das Bereifen des Verdampfers (Vereisen), welches den Wärmeübergang verschlechtert und bei Dauerbetrieb die nutzbare Luftmenge reduziert. Ein unkontrolliertes kurzzeitiges Antauen und erneutes Vereisen könnten zudem den Verdampfer im ungünstigsten Fall zerstören.

Damit eine ausreichende Luftmenge durch den Verdampfer strömen kann, muss der Luftvolumenstrom mit einem Gebläse gefördert werden. Dabei erweist sich als vorteilhaft, dass die in den Verdampfer gesaugte Zuluft einen Volumenstrom zwischen 30 m³/h und 300 m³/h, insbesondere zwischen 50 m³/h und 150 m³/h, besonders zwischen 70 m³/h und 100 m³/h aufweist. Diese Angaben betreffen jeweils den Betrieb haushaltsüblicher Geschirrspülmaschinen. Bei gewerblichen Großmaschinen, können diese Luftmengen um ein Vielfaches erhöht sein. Bei einem Luftvolumenstrom von beispielsweise 100 m³/h, der um eine Temperaturdifferenz von 10K durch einen Verdampfer abgekühlt wird, werden ca. 330W sensible Kühlleistung benötigt. Dies reicht aus, um eine Haushaltsspülmaschine in einer noch akzeptablen Zeitspanne mittels eines Wärmepumpenkreislaufes aufzuheizen. Die Heizleistung setzt sich dann näherungsweise aus der tatsächlichen Kühlleistung des Verdampfers und der Antriebsleistung des Verdichters zusammen.

Vorteilhaft beträgt die Kühlleistung des Wärmepumpenkreislaufes dabei zwischen 100W und 1000W, vorzugsweise aber zwischen 200W und 600W, insbesondere zwischen 300W und 400W. Falls ein Verdichter mit einer Antriebsleistung von ca. 200W verwendet wird, ergibt sich somit eine Heizleistung des Wärmepumpenkreislaufes zwischen 400W und 800W.

Die Erfindung sieht weiterhin vor, dass die Entfeuchtungsleistung des Verdampfers zwischen 5 g/h und 800 g/h liegt. Weiterhin empfiehlt es sich, dass die Temperatur der Zuluft im Wesentlichen zwischen 0°C und 40°C, insbesondere zwischen 10°C und 30°C, besonders zwischen 18°C und 25°C liegt. Das Verfahren ist vorteilhafterweise dazu ausgelegt, als Zuluft die Raumluft des Aufstellungsortes der Geschirrspülmaschine zu verwenden, welche eine übliche Umgebungstemperatur aufweist.

Das Verfahren ist vorzugsweise zudem so ausgebildet, dass die Zuluft nach Abgabe der Wärmeenergie an das Kältemittel um 5K bis 15K, insbesondere 8K bis 10K, abgekühlt ist. Die vorgenannten Parameter ermöglichen eine optimierte Wärmeübertragung von der Zuluft auf das Kältemittel.

Die Erfindung sieht weiterhin vor, dass das im Verdampfer gebildete Kondensat der Zuluft in einem Kondensatbehälter gesammelt wird. Dies ist insbesondere vorteilhaft, weil das im Verdampfer gebildete Kondensat je nach Umgebungsbedingungen weit über 200 ml (bis zu 800 ml) betragen kann. Sofern dieses ungehindert in den Bodenbereich der Geschirrspülmaschine läuft, könnten die dort angeordneten elektrischen und elektronischen Komponenten in Mitleidenschaft gezogen werden. Hierbei ist zu berücksichtigen, dass bei solch großen Mengen das Kondensat nicht vollständig durch die aufgeheizten Komponenten wieder verdampfen kann.

Weiterhin ist vorgesehen, dass das Kondensat in einen Spülbehälter der Geschirrspülmaschine gegeben wird. Damit wird das Kondensat nicht einfach als Abwasser aus der Maschine entfernt, sondern im Rahmen eines Spülprogramms genutzt. Dadurch kann der Gesamtwasserverbrauch vorteilhaft reduziert werden, wodurch wiederum die Energieeffizienz der Geschirrspülmaschine steigt. Dabei wird das gesammelte Kondensat entweder direkt in ein laufendes Spülprogramm integriert oder in einem Behälter gesammelt, um in einem späteren Programmabschnitt des gleichen Spülprogramms oder in ein nachfolgendes Spülprogramm eingesetzt zu werden. Bei längerer Bevorratung des Kondensats müssen dabei gegebenenfalls Maßnahmen getroffen werden, die die Hygiene sicherstellen und die Ausbreitung von Keimen verhindern.

Schließlich ist vorgesehen, dass das Kondensat vor dem Start eines neuen Programmabschnittes oder eines neuen Spülprogramms der Geschirrspülmaschine in den Spülbehälter gegeben wird. Dadurch kann die zusätzliche Wassermenge direkt für den neuen Programmabschnitt oder das neue Spülprogramm verwendet werden.

Gemäß einem weiteren Aspekt der Erfindung wird eine Geschirrspülmaschine vorgeschlagen mit einem Spülraum, in welchem Sprüheinrichtungen zur Beschickung von Spülgut mit Spülflotte angeordnet sind, und mit einem Wärmepumpenkreislauf zum Aufheizen der Spülflotte, welcher einen Verdampfer, einen Verdichter und einen Verflüssiger aufweist. Der Verdampfer weist eine Vielzahl von Lamellen, d.h. dünne Metallplatten auf, welche parallel oder annähernd parallel zueinander angeordnet ist. Die Zuluft strömt zwischen benachbarten Lamellen hindurch. Die Lamellen dienen als Kondensationsfläche für die Zuluft bzw. dem darin enthaltenen Wasserdampf.

Um einerseits einen kompakten Aufbau des Verdampfers zu erreichen, andererseits eine gute Kühlleistung zu erzielen und darüber hinaus lange Standzeiten zu gewährleisten, beträgt der Abstand zwischen benachbarten Lamellen vorzugsweise zwischen 0,5 mm und 8 mm.

Im Hinblick auf einen besonders kompakten Aufbau des Verdampfers und einer optimalen Kühlleistung ist es jedoch vorteilhaft, wenn die Lamellenabstände höchstens 3 mm, insbesondere 0,5 bis 3 mm, vorzugsweise 1,5mm bis 2,5 mm betragen. Hierdurch kann auf engstem Raum eine besonders gute Kühlung erfolgen und - im Falle, dass das Kondensat gesammelt wird - eine große Ausbeute an Kondensat erzielt und dadurch der Wasserverbrauch gesenkt werden.

Um das Ablaufen des Kondensats weiter zu verbessern und die Ausbeute an Kondensat weiter zu steigern, ist es vorteilhaft, wenn die Lamellen des Verdampfers hydrophil beschichtet sind. Dies stellt sicher, dass sich an den Lamellen nur ein dünner Wasserfilm bildet der ungehindert ablaufen kann, was insbesondere im Fall geringer Lamellabstände die Funktionsweise verbessert.

Weiterhin sollten die Lamellen durchgängig gerade ausgebildet sein und keine Rippung aufweisen. Vorteilhaft ist zudem, wenn die Lamellen in Schwerkraftrichtung ausgerichtet sind, so dass das Ablaufen des Kondensats unterstützt wird, d.h. das Kondensat fließt zumindest annähernd senkrecht die Lamellenflächen hinab. Die plattenförmigen Lamellen weisen darüber hinaus zumindest eine Ecke auf und sind in der Geschirrspülmaschine vorzugsweise jeweils so angeordnet, dass eine Ecke der Lamelle einen tiefstgelegenen Punkt einer Lamelle darstellt, auf den Kanten der Lamelle schräg zulaufen. Eine solche Anordnung kann einfach durch eine Neigung des kastenförmigen Verdampfers erreicht werden. Auf diese Weise kann zusätzlich der Ablauf des Kondensats aus dem Verdampfer verbessert werden. Diese speziellen Ausbildungen des Verdampfers ermöglichen insgesamt ein vereinfachtes Ablaufen des Kondensates aus dem Verdampfer in den Kondensatbehälter und können - im Falle der Leitung des Kondensats in den Spülraum - den Wasserverbrauch senken.

Eine weitere vorteilhafte Ausgestaltung des Verdampfers sieht Lamellenabstände von größer 3mm vor, nämlich Abstände von 3mm bis 8mm, vorzugsweise 4 mm bis 6 mm. Bei derartigen Lamellenabständen ist die Verschmutzungsneigungen des Verdampfers deutlich geringer, was die Standzeiten bzw. die Lebensdauer des Verdampfers erhöht. Die Selbstreinigung der Lamellen kann vorteilhafterweise durch eine hydrophobe Beschichtung unterstützt werden. Wie vom Lotusblüteneffekt bekannt, spülen die großen ablaufenden Wassertropfen den anhaftenden Schmutz ab.

Vorteilhaft ist der Kondensatbehälter so angeordnet, dass das im Verflüssiger, d.h. an den Lamellen entstandene Kondensat durch Schwerkraftwirkung in den Kondensatbehälter gelangt. Der Kondensatbehälter kann etwa unter dem Verdampfer angeordnet sein, insbesondere derart dass das im Verdampfer anfallende Kondensat direkt in den Kondensatbehälter abtropft. Der Kondensatbehälter kann auch räumlich getrennt, d.h. beabstandet vom Verdampfer angeordnet sein. Insbesondere kann das Verdampfergehäuse, die Luftführung durch den Verdampfer und/oder zusätzliche Leitungen auch so ausgebildet sein, dass das Kondensat in den Kondensatbehälter durch Schwerkraftwirkung fliessen kann.

Ein Wärmepumpenkreislauf zum Aufheizen von Spülflotte in einer Geschirrspülmaschine ist nachfolgend anhand der Figuren näher beschrieben.

Dabei zeigen
- Fig. 1: einen schematischen Aufbau eines Wärmepumpenkreislaufes;
- Fig. 2: den Wärmepumpenkreislauf gemäß Fig. 1, eingebaut in eine Geschirrspülmaschine;
- Fig. 3: eine Seitenansicht der Geschirrspülmaschine gemäß Fig. 2;
- Fig. 4: schematisch einen Querschnitt durch eine Geschirrspülmaschine.

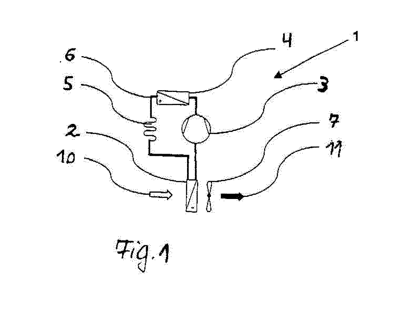

Fig. 1 zeigt einen schematischen Aufbau eines Wärmepumpenkreislaufes 1 mit einem Verdampfer 2, einem Verdichter 3, einem Verflüssiger 4, einer Drosselstelle 5 und einem diese verbindenden Strömungskreislauf 6. Des Weiteren befindet sich in Strömungsrichtung hinter dem Verdampfer 2 ein Ventilator 7.

Der Wärmepumpenkreislauf 1 funktioniert so, dass der Ventilator 7 Zuluft 10 (d.h. Raumluft) durch den Verdampfer 2 hindurch saugt. Hierdurch wird die Zuluft 10 im Verdampfer 2 abgekühlt. Um die erfindungsgemäße nasse Kühlung zu gewährleisten, befindet sich die Oberflächentemperatur des Verdampfers 2 unter der Taupunkttemperatur der Zuluft 10. Bei Zuluft 10 mit einer Temperatur von 20°C und 50% r.F. beträgt die Taupunkttemperatur bei 1013 hPa in etwa 9,3°C. Sofern die Oberflächentemperatur des Verdampfers 2 geringer als diese 9,3°C ist, kondensiert der in der Zuluft 10 enthaltene Wasserdampf innerhalb des Verdampfers 2. Damit eine ausreichende Heizleistung des Wärmepumpenkreislaufes 1 sichergestellt ist, muss eine ausreichende Menge Zuluft 10 durch den Verdampfer 2 strömen. Hierzu empfiehlt sich die Verwendung eines Ventilators 7, welcher in Strömungsrichtung vorzugsweise hinter dem Verdampfer 2 angeordnet ist. Hierzu ist beispielsweise ein Luftvolumenstrom von 100 m³/h geeignet. Bei einem Luftvolumenstrom von 100 m³/h, der um eine Temperaturdifferenz von 10K durch den Verdampfer 2 abgekühlt wird, würden bereits bei trockener Kühlung ca. 330W Kühlleistung erzeugt. Dies reicht aus, um eine haushaltsübliche Geschirrspülmaschine 8 in akzeptabler Zeitspanne mittels des Wärmepumpenkreislaufes 1 aufzuheizen. Bei nasser Kühlung erhöht sich die Kühlleistung je nach Zuluftfeuchte entsprechend. Die Heizleistung des Wärmepumpenkreislaufes 1 setzt sich dann näherungsweise aus der tatsächlichen Kühlleistung des Verdampfers 2 und der Antriebsleistung des nachfolgenden Verdichters 3 zusammen. Dabei ergeben sich je nach Antriebsleistung des Verdichters und Wirkungsgrad der Anlage Heizleistungen zwischen 130W und 2000W.

Die abgekühlte Zuluft 10 wird nach dem Verdampfer 2 über den Ventilator 7 als Abluft 11 weggeleitet. Dafür ist ein entsprechender Luftkanal 9 vorgesehen.

Durch die von der Zuluft 10 auf das Kältemittel übergeleitete Wärmeenergie, kann das Kältemittel verdampfen. Der Verdichter 3 saugt anschließend das gasförmige Kältemittel mit niedrigem Druck an und verdichtet es auf einen hohen Druck. Dabei wird das Kältemittel erhitzt, wobei es annähernd die Summe aus Verdampfungsenergie und Antriebsenergie des Verdichters 3 beinhaltet. Diese Gesamtenergie wird am Verflüssiger 4 wieder abgegeben. Dies geschieht über die Kondensation des Kältemittels innerhalb des Verflüssigers 4. Das flüssige Kältemittel wird anschließend über die Drosselstelle 5 auf einen niedrigen Druck expandiert, wo es anschließend wieder verdampfen kann.

Das im Verdampfer 2 gebildete Kondensat 13 der Zuluft 10 wird innerhalb eines Kondensatbehälters gesammelt und in einen Spülbehälter der Geschirrspülmaschine 8 gegeben. Das Kondensat 13 wird dabei so lange gesammelt, bis sich die Geschirrspülmaschine 8 kurz vor einem neuen Spülgang befindet und sodann in den Spülbehälter eingelassen. Hierdurch kann die Flüssigkeitsmenge des Kondensats 13 für den folgenden Spülgang genutzt werden.

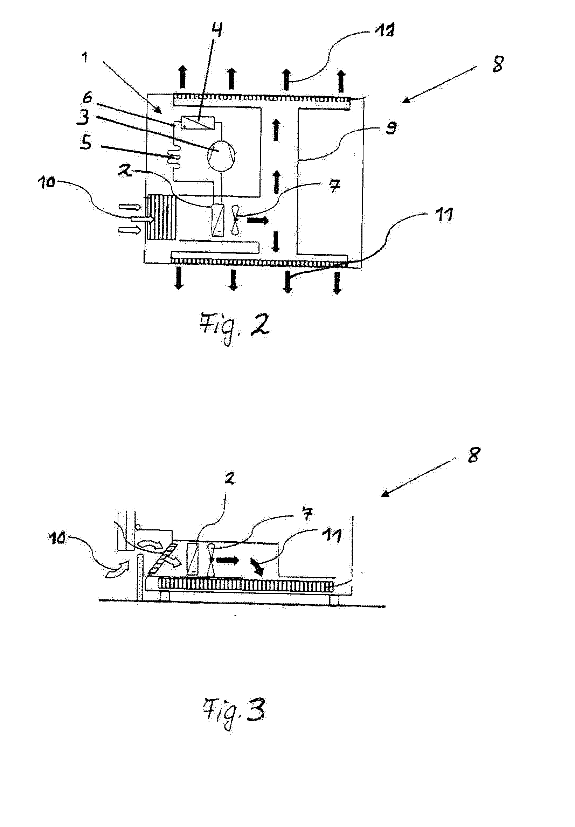

Fig. 2 zeigt den Wärmepumpenkreislauf 1 gemäß Fig. 1, welcher in einer Geschirrspülmaschine 8 eingebaut ist. Hier ist zusätzlich der Luftkanal 9 dargestellt, in welchem der Verdampfer 2 angeordnet ist.

Fig. 3 zeigt den Bodenbereich der Geschirrspülmaschine 8 gemäß Fig. 2.

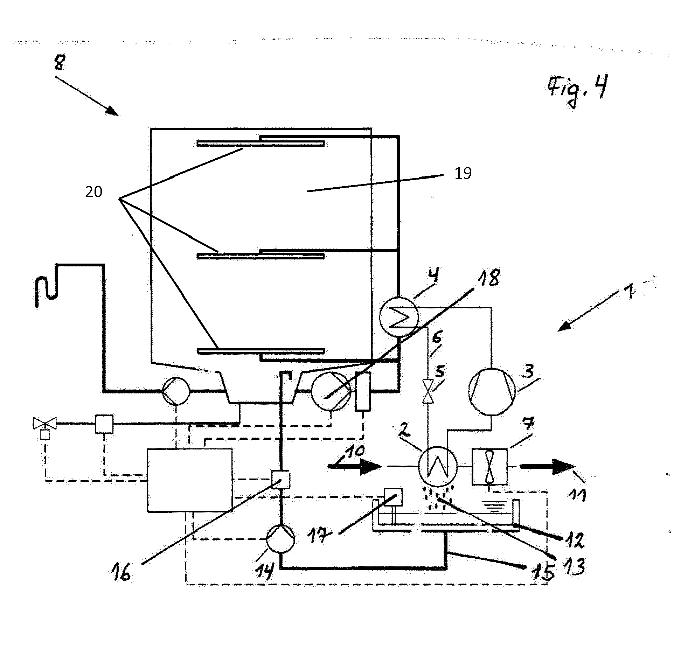

Fig. 4 zeigt schematisch einen Querschnitt durch eine Geschirrspülmaschine 8. Die Geschirrspülmaschine 8 verfügt über einen Wärmepumpenkreislauf 1 mit einem Verdampfer 2, einem Verdichter 3, einem Verflüssiger 4, einer Drosselstelle 5, einem Strömungskreislauf 6 und einem Ventilator 7. Zum Sammeln des am Verdampfer 2 entstehenden Kondensats 13 ist unterhalb des Verdampfers 2 ein Kondensatbehälter 12 angeordnet. Mittels einer Kondensatpumpe 14 wird das Kondensat 13 aus dem Kondensatbehälter 12 abgesaugt und durch eine Kondensatleitung 15 in den Spülraum 19 der Geschirrspülmaschine 8 gegeben. Zur Messung der Menge des Kondensats 13 innerhalb des Kondensatbehälters 12 dient ein Füllstandssensor 17. Ein Durchflusssensor 16 innerhalb der Kondensatleitung 15 misst den Durchfluss von dem Kondensatbehälter 12 in den Spülraum 19 der Geschirrspülmaschine 8.

Bei der vorgeschlagenen Lösung gemäß Fig. 4 wird das Kondensat 13 innerhalb des Kondensatbehälters 12 gesammelt. Die Kondensatpumpe 14 fördert das Kondensat 13 über eine Kondensatleitung 15 aus dem Kondensatbehälter 12 in den Spülraum 19 der Geschirrspülmaschine 8. Mittels der Geräteelektronik kann die Kondensatpumpe 14 angesteuert werden. Durch diese Ausgestaltung kann die Geschirrspülmaschine 8 die Wassereinläufe bei Bedarf mit Kondensat 13 ergänzen, wodurch sich der Frischwasserverbrauch der Geschirrspülmaschine 8 insgesamt verringert.

Für die Bereitstellung der während eines Spülprogramms benötigten Wassermenge ergeben sich zwei mögliche Verfahrensabläufe.

In einer ersten erfindungsgemäßen Ausgestaltung wird eine definierte Menge Frischwasser, beispielsweise zwei Liter, in den Sammeltopf der Geschirrspülmaschine 8 gegeben. Vorteilhafterweise wird für diese Teilmenge die für diesen Spülgang vorgesehenen Wassermenge abzüglich der maximal möglichen Kondensatmenge verwendet. Anschließend wird die Umwälzpumpe 18 mit niedriger Drehzahl, beispielsweise 2500 Umdrehung/min gestartet, wodurch ein stabiler Pumpenlauf sichergestellt wird. Anschließend wird das Kondensat 13 (oder eine Teilmenge Kondensat 13) in den Sammeltopf der Geschirrspülmaschine 8 gegeben, wobei gleichzeitig die Drehzahl der Umwälzpumpe 18 bis zum Erreichen der Solldrehzahl bei stabilem Pumpenlauf erhöht wird. Die betreffende Drehzahl kann beispielsweise 3750 Umdrehung/min betragen. Reicht die Kondensatmenge nicht aus, kann die Drehzahl der Umwälzpumpe 18 nicht auf die Solldrehzahl für stabilen Pumpenlauf eingestellt werden. Dabei müssen zur Erreichung der Solldrehzahl zusätzlich ein oder mehrere weitere Teilwassereinläufe mit Frischwasser oder Kondensat 13 erfolgen, bis ein stabiler Pumpenlauf bei Solldrehzahl der Umwälzpumpe 18 erreicht ist.

Ein zweiter Verfahrensablauf sieht die Verwendung des Durchflusssensors 16 innerhalb der Kondensatleitung 15 vor. Nach diesem Verfahren wird das gesamte im Kondensatbehälter 12 vorhandene Kondensat 13 in den Spülbehälter gegeben und die entsprechende Menge mittels des Durchflusssensors 16 gemessen. Anschließend wird der Differenzwert zwischen der Istwassermenge des Kondensats 13 und einer Sollmenge gebildet. Die fehlende Wassermenge wird durch Frischwasser ausgeglichen und in den Spülbehälter der Geschirrspülmaschine 8 gegeben.

Weiterhin kann innerhalb des Kondensatbehälters 12 ein Füllstandssensor 17 angeordnet sein, welcher die zur Verfügung stehende Kondensatmenge bereits innerhalb des Kondensatbehälters 12 misst.

Bei unvorhergesehenen starken Kondensatanfall, kann des Weiteren mittels des Füllstandssensor 17 ein drohender Überlauf des Kondensatbehälters 12 sensiert werden. Dieser kann dann durch Einschalten der Kondensatpumpe verhindert werden.

Weiterhin kann die Kondensatleitung 15 ausgehend vom Kondensatbehälter 12 entweder direkt in den Spülbehälter der Geschirrspülmaschine 8 geführt werden oder in andere mit dem Spülbehälter fluidtechnisch verbundene Bauteile der Geschirrspülmaschine 8, etwa in einen Sammeltopf, welcher sich in Strömungsrichtung hinter dem Spülbehälter befindet, oder in eine Wassereinlauftasche.

Die Kondensatpumpe 14 kann eine Membran-, Vibrations-, Kreisel- oder Hubkolbenpumpe sein.

### Bezugszeichenliste

- 1: Wärmepumpenkreislauf
- 2: Verdampfer
- 3: Verdichter
- 4: Verflüssiger
- 5: Drosselstelle
- 6: Strömungskreislauf
- 7: Ventilator
- 8: Geschirrspülmaschine
- 9: Luftkanal
- 10: Zuluft
- 11: Abluft
- 12: Kondensatbehälter
- 13: Kondensat
- 14: Kondensatpumpe
- 15: Kondensatleitung
- 16: Durchflusssensor
- 17: Füllstandssensor
- 18: Umwälzpumpe
- 19: Spülraum
- 20: Sprüheinrichtungen

## Patentansprüche

1. Verfahren zum Aufheizen von Spülflotte in einer Geschirrspülmaschine (8), wobei Zuluft (10) durch einen Verdampfer (2) eines Wärmepumpenkreislaufes (1) geleitet wird, wobei die Zuluft (10) innerhalb des Verdampfers (2) Wärmeenergie an ein Kältemittel abgibt, wobei anschließend das verdampfte Kältemittel mittels eines Verdichters (3) komprimiert wird, und wobei anschließend das komprimierte Kältemittel innerhalb eines Verflüssigers (4) kondensiert wird und Wärmeenergie an Spülflotte abgibt,
**dadurch gekennzeichnet,**
**dass** zumindest eine Komponente der Zuluft (10) innerhalb des Verdampfers (2) kondensiert.

2. Verfahren nach Anspruch 1,
**dadurch gekennzeichnet,**
**dass** die zumindest eine Komponente Wasserdampf ist.

3. Verfahren nach einem der vorhergehenden Ansprüche,
**dadurch gekennzeichnet,**
**dass** das im Verdampfer (2) gebildete Kondensat der Zuluft (10) gesammelt und dem Spülraum (19) der Geschirrspülmaschine (8) zugeleitet wird.

4. Verfahren nach einem der vorhergehenden Ansprüche,
**dadurch gekennzeichnet,**
**dass** die Temperatur der Zuluft (10) im Wesentlichen zwischen 0°C und 40°C, insbesondere zwischen 10°C und 30°C, besonders zwischen 18°C und 25°C liegt.

5. Verfahren nach einem der vorhergehenden Ansprüche,
**dadurch gekennzeichnet,**
**dass** die Zuluft (10) nach Abgabe der Wärmeenergie an das Kältemittel um 5K bis 15K, insbesondere 8K bis 10K, abgekühlt ist.

6. Verfahren nach einem der vorhergehenden Ansprüche,
**dadurch gekennzeichnet,**
**dass** die Kühlleistung des Wärmepumpenkreislaufes (1) zwischen 100W und 1000W, vorzugsweise zwischen 200W und 600W, insbesondere zwischen 300W und 400W liegt.

7. Verfahren nach einem der vorhergehenden Ansprüche,
**dadurch gekennzeichnet,**
**dass** die in den Verdampfer (2) gesaugte Zuluft (10) einen Volumenstrom zwischen 30 m³/h und 300 m³/h, insbesondere zwischen 50 m³/h und 150 m³/h, besonders zwischen 70 m³/h und 100 m³/h aufweist.

8. Verfahren nach einem der vorhergehenden Ansprüche,
**dadurch gekennzeichnet,**
**dass** die Verdampfungstemperatur des Kältemittels zwischen -15°C und 10°C, insbesondere zwischen 0°C und 5°C liegt.

9. Geschirrspülmaschine (8) mit einem Spülraum (19), in welchem Sprüheinrichtungen (20) zur Beschickung von Spülgut mit Spülflotte angeordnet sind, und mit einem Wärmepumpenkreislauf (1) zum Aufheizen der Spülflotte, welcher einen Verdampfer (2), einen Verdichter (3) und einen Verflüssiger (4) aufweist,
wobei der Verdampfer (2) eine Vielzahl von als Kondensationsfläche wirkende Lamellen aufweist,
wobei der Lamellenabstand zwischen 0,5 mm und 8 mm beträgt.

10. Geschirrspülmaschine (8) nach dem vorhergehenden Anspruch,
**dadurch gekennzeichnet,**
**dass** die Lamellen einen Lamellenabstand zwischen 0,5mm und 3mm, insbesondere zwischen 1,5mm und 2,5mm, und/oder eine hydrophile Beschichtung aufweisen.

11. Geschirrspülmaschine (8) nach Anspruch 9,
**dadurch gekennzeichnet,**
**dass** die Lamellen einen Lamellenabstand zwischen 3 mm und 8 mm, insbesondere zwischen 4 mm und 6 mm und/oder eine hydrophobe Beschichtung aufweisen.
